# EUROPÄISCHE PATENTANMELDUNG

(11) **EP 4 130 583 A1**
(43) Veröffentlichungstag der Anmeldung: **08.02.2023**
(21) Anmeldenummer: 22197996.6
(22) Anmeldetag: 23.01.2020
(51) Int. Cl.: F24D 3/14, F16B 15/00, F16B 15/08

(54) **KLAMMER FÜR DIE FIXIERUNG VON ROHREN AUF EINEM SUBSTRAT, ENTSPRECHENDER KLAMMERPACK UND ENTSPRECHENDE KLAMMERVORRICHTUNG**

(30) Priorität: 25.01.2019 DE 102019101858
(62) Teilanmeldung aus: 20153271.0
(71) Anmelder: Burk Kunststofftechnik GmbH, 35075 Gladenbach Hessen (DE)
(72) Erfinder: CHAPPUIS, Fabrice Philippe Thierry, 73310 Chanaz (FR); BURK, Norbert, 35075 Gladenbach (DE); BURK, Marco, 35236 Breidenbach (DE)
(74) Vertreter: Lavoix

(57) **Zusammenfassung**

Klammer (2; 2.1; 2.2; 2.3) für die Fixierung von Rohren auf einem Substrat, umfassend einen Scheitelabschnitt (10), der ein proximales Ende und ein distales Ende aufweist und einen Scheitel (12) bildet, zwei Klammerabschnitte (14, 16). Der Scheitelabschnitt umfasst eine Stirnseite (18, 20). Die Klammer umfasst eine Frontalebene FE und eine Mittelebene ME. Der Scheitelabschnitt definiert eine Zentralachse ZA. Die Klammer weist ein mit dem Scheitelabschnitt verbundenes Verbindungselement (4) auf, mit dem die Klammer mit einer weiteren Klammer (2.2) lösbar verbindbar ist, wobei das Verbindungselement einen Verbindungselementbereich (22) definiert. Die Klammer weist einen Ausgleichsbereich (24) auf, der sich in Zentralachsrichtung erstreckt. Die Klammer weist an der Stirnseite ein Ausgleichselement (8) auf, das einem, durch das Verbindungselement hervorgerufenen, Winkelversatz der Klammer bezüglich der weiteren Klammer (2.2) entgegenwirkt. Das Ausgleichselement ist im Ausgleichsbereich angeordnet.

## Beschreibung

Die vorliegende Erfindung betrifft eine Klammer gemäß dem Oberbegriff des Anspruches 1.

Es sind Klammervorrichtungen bekannt, die dazu dienen Warmwasserrohre einer Fußbodenheizung auf einem Substrat zu fixieren.

Die Klammervorrichtungen umfassen eine Klammerzuführung mit einem geraden Klammerpackhalter.

Die Klammerpacke umfassen mehrere Klammern, die durch lokales Schmelzen miteinander verbunden sind. Durch die Hitzeeinwirkung und das Schrumpfen nach dem Schmelzvorgang neigen die Klammerpacke zum Verzug und verkanten sich auf dem Klammerpackhalter.

Die vorliegende Erfindung hat zum Ziel, den Klammervorgang wirtschaftlicher und effizienter zu gestalten.

Zu diesem Zweck hat die vorliegende Erfindung eine Klammer gemäß Anspruch 1 zum Gegenstand.

Vorteilhafte Ausgestaltungen der Klammer sind in den Unteransprüchen 2 bis 7 angegeben.

Die Erfindung hat ebenfalls einen Klammerpack und eine Klammervorrichtung gemäß der Ansprüche 8 bis 10 zum Gegenstand.

Beispielhafte Ausgestaltungen der Erfindung werden anhand der folgenden Zeichnungen näher erläutert. Die Zeichnungen zeigen folgendes:
Figur 1 eine Ansicht der Stirnseite einer bekannten Klammer und schematisch eine bekannte Klammerpackaufnahme,
Figur 2 eine Seitenansicht eines bekannten Klammerpacks aus Klammern wie in Figur 1 gezeigt und schematisch eine bekannte Klammerpackaufnahme,
Figur 3 eine der Figur 1 entsprechenden Ansicht einer ersten Ausführungsform der erfindungsgemäßen Klammer und schematisch die Klammerpackaufnahme,
Figur 4 eine der Figur 2 entsprechenden Ansicht eines erfindungsgemäßen Klammerpacks aus Klammern gemäß Figur 3 und schematisch die Klammerpackaufnahme,
Figur 5 eine Seitenansicht der Klammer der Figur 3,
Figur 6 das vergrößerte Detail VI der Figur 5,
Figur 7 das vergrößerte Detail VII der Figur 3,
Figur 8 eine der Figur 3 entsprechenden Ansicht einer Klammer gemäß einer zweiten Ausführungsform der erfindungsgemäßen Klammer,
Figur 9 eine Aufsicht auf die Klammer der Figur 8,
Figur 10 eine der Figur 3 entsprechenden Ansicht einer Klammer gemäß einer dritten Ausführungsform der erfindungsgemäßen Klammer, und
Figur 11 eine Aufsicht auf die Klammer der Figur 10.

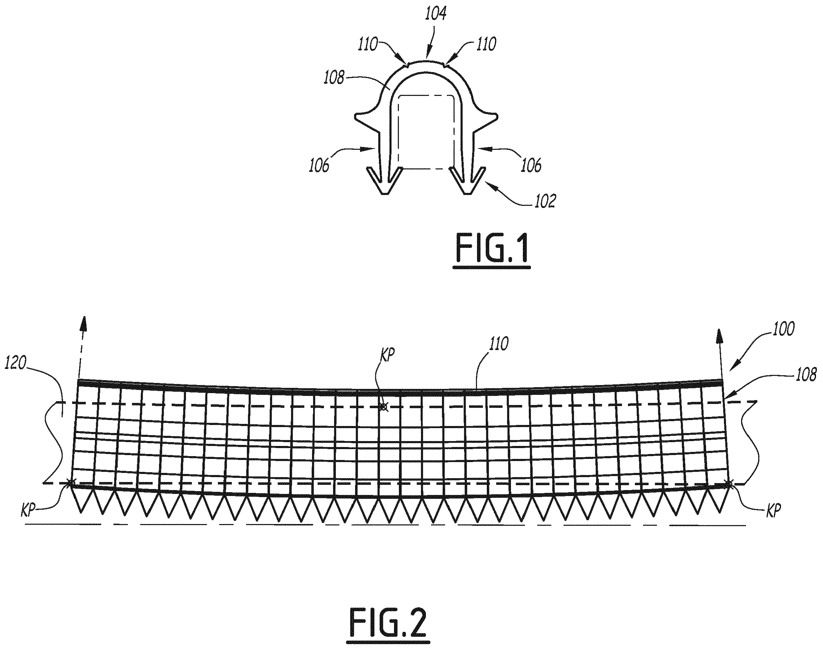

Figur 1 zeigt eine bekannte Klammer 102 in Stirnansicht.

Die Klammer ist bestimmt für die Fixierung von Rohren auf einem Substrat, und umfasst einen Scheitelabschnitt 104, der ein proximales Ende und ein distales Ende aufweist und einen Scheitel bildet, zwei Klammerabschnitte 106, die durch den Scheitelabschnitt verbunden sind. Die Klammer und somit der Scheitelabschnitt weist eine erste und eine zweite Stirnseite auf, von der eine Stirnseite 108 sichtbar ist. Die Klammer weist zwei mit dem Scheitelabschnitt stoffschlüssig verbundene Verbindungselemente 110 auf, mit dem sie mit einer weiteren Klammer, die an eine Stirnseite angrenzt, lösbar verbindbar ist, lösbar verbunden ist oder lösbar verbunden gewesen ist.

Figur 1 zeigt in Seitenansicht einen bekannten Klammerpack 100, der eine Vielzahl an oben beschriebenen Klammern 102 aufweist. Der Klammerpack 100 besteht aus einer Vielzahl von Klammern, die miteinander durch lokale thermische Verformung und Schmelzen verbunden sind. Durch den Schmelz- und anschließenden Abkühlvorgang entsteht zwischen den Klammern ein Winkelversatz sowie schlussendlich zwischen den Endklammern ein entsprechender translatorischer Versatz. Dieser Versatz führt zu einem Kontakt ohne Spiel an Kontaktpunkten KP zwischen dem Klammerpack 100 und einer Klammerpackaufnahme 120 und zu Verkanten der Klammern auf der Klammerpackaufnahme.

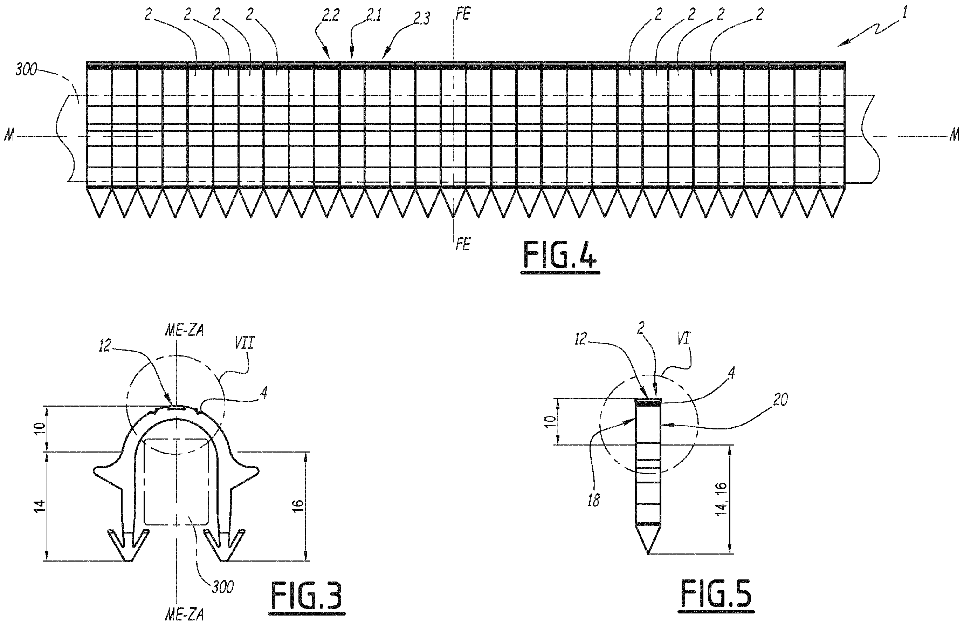

Figur 3 zeigt eine Ansicht der Stirnseite einer ersten Ausführungsform einer erfindungsgemäßen Klammer 2.

Figur 4 zeigt eine Seitenansicht eines erfindungsgemäßen Klammerpacks 1 aus Klammern gemäß Figur 3. Der Klammerpack 1 umfasst eine erste Klammer 2.1 und eine zweite Klammer 2.2, die jeweils gemäß Figur 3 ausgebildet ist. Die erste Klammer und die zweite Klammer sind durch jeweilige Verbindungselemente 4 verbunden. Der Klammerpack 1 umfasst eine dritte Klammer 2.3 gemäß Figur 3 wobei die dritte Klammer und die zweite Klammer ebenfalls durch jeweilige Verbindungselemente 4 verbunden sind.

Soweit nicht anders angegeben, haben die "erste Klammer 2.1", die "zweite Klammer 2.2 " und die "dritte Klammer 2.3" gleiche oder gleichartige Eigenschaften, insbesondere die gleichen Merkmale, die in Zusammenhang einer Klammer 2 beschrieben sind. Das gleiche gilt für "die Klammer", die "weitere Klammer" und die "zusätzliche Klammer". Die Begriffe sind also im Wesentlichen austauschbar und dienen im Wesentlichen nur der Abgrenzung einer entsprechenden Klammer mit einer oder zwei zu dieser jeweils benachbarten Klammer.

Allgemein umfasst der Klammerpack 1 eine Vielzahl an gleichartigen oder identischen Klammern 2, wobei jeweils zwei benachbarte Klammern 2 durch lösbare Verbindungselemente 4 verbunden sind. Die Verbindungselemente 4 umfassen aufgeschmolzene und wieder erstarrte Bereiche der Klammern. Jedes Verbindungselement ist also durch Schweißen entstanden. Die Verbindungselemente 4, in Abwesenheit der Ausgleichselemente (s.u.), rufen durch den Verzug bei der Erstarrung der aufgeschmolzenen Bereiche einen Winkelversatz der jeweiligen Klammer 2 bezüglich der benachbarten Klammer hervor.

Der Klammerpack 1 umfasst Ausgleichselemente 8, die auf der jeweiligen Klammer 2 angeordnet sind und die diesem Winkelversatz soweit entgegenwirken, dass jeweils benachbarte Klammern 2.1, 2.2, 2.3 im Wesentlichen keinen Winkelversatz zueinander aufweisen. Der Klammerpack 1 erstreckt sich also entlang einer geraden Mittellinie M-M.

Jede Klammer 2 ist jeweils eine Klammer für die Fixierung von Rohren auf einem Substrat.

Im Folgenden wird Beispielhaft die erste Klammer 2.1 beschrieben.

Die erste Klammer 2.1 umfasst einen Scheitelabschnitt 10, der ein proximales Ende und ein distales Ende aufweist und einen Scheitel 12 bildet, und zwei Klammerabschnitte 14, 16, die durch den Scheitelabschnitt verbunden sind. Jeder Klammerabschnitt 14, 16 weist ein distales Ende mit Widerhaken auf. Ein proximales Ende jedes Klammerabschnitts 14, 16 ist mit dem distalen Ende der Klammer 2.1 verbunden.

Der Scheitelabschnitt 10 weist eine erste und eine zweite Stirnseite 18, 20 auf. Die Klammer weist eine Mittelebene ME auf, die ebenfalls eine Symmetrieebene der Klammer bildet. Die zwei Klammerabschnitte 14, 16 befinden sich auf unterschiedlichen Seiten der Mittelebene ME. Der Scheitelabschnitt 10 definiert eine Zentralachse ZA, die in der Mittelebene liegt und sich in Richtung vom proximalen zum distalen Ende erstreckt. Die Klammer 2 weist ebenfalls eine Frontalebene FE auf, die senkrecht zur Mittelebene ME verläuft und durch die Zentralachse verläuft. Die Klammer 2 ist im Wesentlichen zur Frontalebene FE symmetrisch.

Konkret weist die erste Klammer zwei mit dem Scheitelabschnitt stoffschlüssig verbundene Verbindungselemente 4 auf, mit denen sie mit einer benachbarten gleichartigen Klammer, zum Beispiel 2.2, die an die erste Stirnseite 18 angrenzt, lösbar verbunden ist. Die Lösbarkeit wird durch Auftrennen der wiedererstarrten Bereiche bzw. Verbindungselemente 4 hergestellt. Diese zwei Verbindungselemente 4 sind auf gegenüberliegenden Seiten der Mittelebene angeordnet.

Die Verbindungselemente 4 definieren in Zentralachsrichtung einen Verbindungselementbereich 22 der Klammer, in dem sich die Verbindungselemente erstrecken.

Die erste Klammer 2.1 weist einen Ausgleichsbereich 24 auf, der sich in Zentralachsrichtung zwischen dem Verbindungselementbereich 22 und dem Scheitel 12 erstreckt. Die erste Klammer 2.1 weist an der ersten Stirnseite eines der Ausgleichselemente 8 auf, das dazu ausgebildet ist, einem, durch das Verbindungselement 4 hervorgerufenen, Winkelversatz der Klammer 2.1 bezüglich der zweiten, benachbarten Klammer 2.2 entgegenzuwirken. Dieses Ausgleichselement 4 ist im Ausgleichsbereich 24 angeordnet. Das Ausgleichselement 4 wirkt also wie ein Anschlag, der die Drehung von zwei aneinander grenzenden Klammern 2 um die durch die Verbindungselemente 4 gebildeten Drehachsen hemmt.

Die zweite Klammer 2.2 weist ebenfalls einen Ausgleichsbereich 24 auf, der sich in Zentralachsrichtung zwischen ihrem Verbindungselementbereich 22 und ihrem Scheitel 12 erstreckt. Die zweite Klammer 2.2 weist an ihrer zweiten Stirnseite 20 ein Ausgleichselement 8 auf, das dazu ausgebildet ist, einem, durch das Verbindungselement 4 hervorgerufenen, Winkelversatz der Klammer 2.2 bezüglich der ersten Klammer entgegenzuwirken. Dieses Ausgleichselement ist im Ausgleichsbereich angeordnet.

Das oder jedes Ausgleichselement 8 ist ein von der ersten Stirnseite vorstehender Vorsprung 26, der näher am proximalen Ende der Klammer als das oder die jeweiligen Verbindungselement(e) 4 angebracht ist, wobei der Vorsprung 26 vorzugsweise stoffschlüssig, insbesondere in einem Stück, mit dem Scheitelabschnitt gefertigt ist. Der Vorsprung 26 ist zum Beispiel durch Spritzguss mit der Klammer 2 gefertigt.

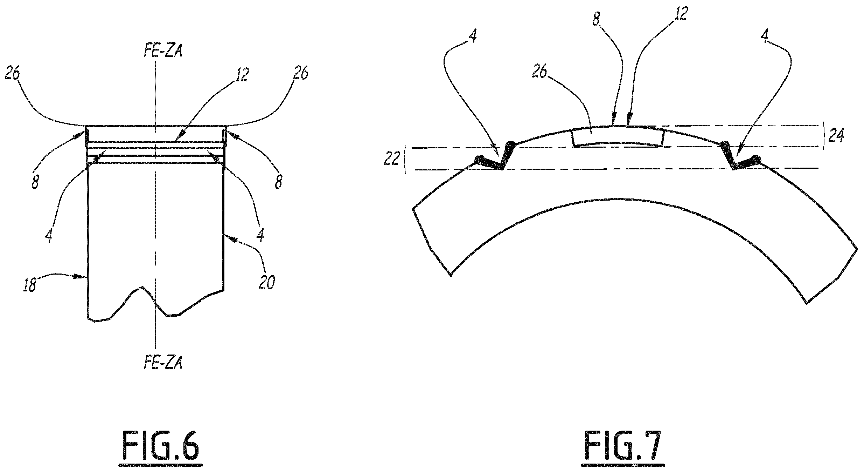

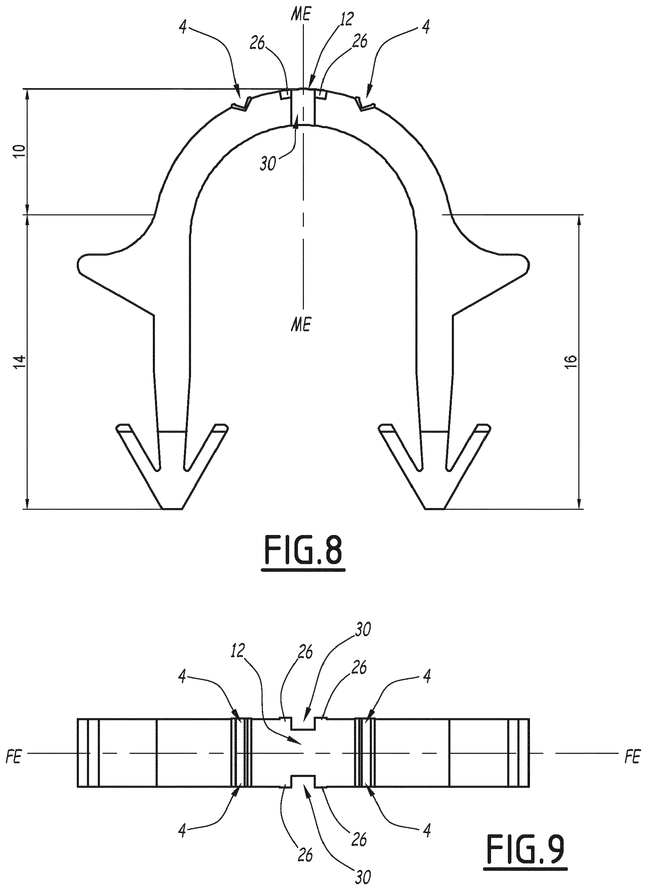

Der Vorsprung 26 erstreckt sich jeweils in Zentralachsrichtung bis zum Scheitel 12. Gemäß den Ausführungsbeispielen der Figuren 3 bis 9 erstreckt sich der oder jeder Vorsprung 26 bis zum Verbindungselementbereich 22, überdeckt diese aber nicht oder nur unwesentlich (siehe Figuren 7 und 9).

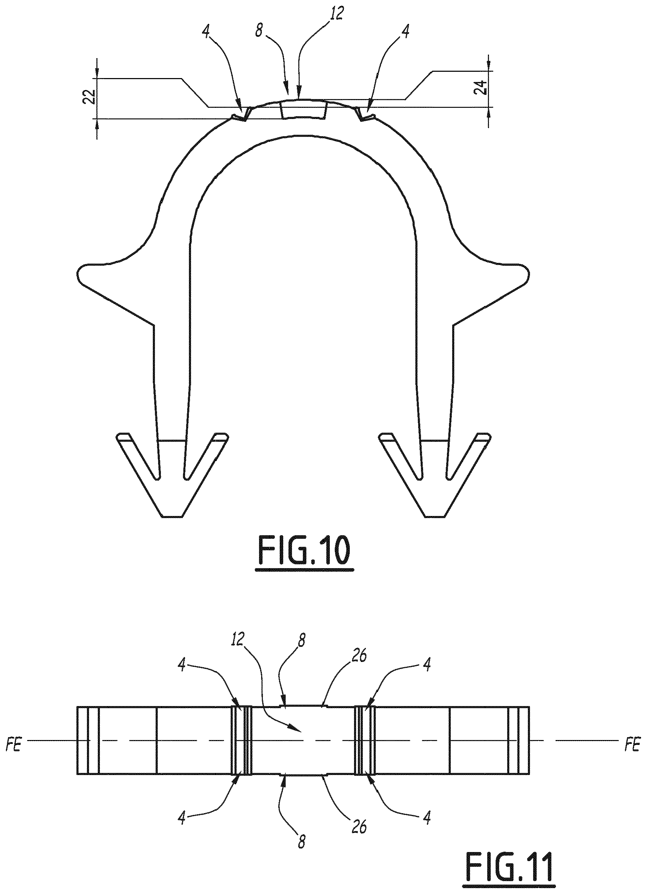

Gemäß einer dritten Ausführungsform überdeckt der oder jeder Vorsprung 26 die Verbindungselementbereich 22 in Richtung der Zentralachse zu einem wesentlichen Teil oder ganz überdecken (siehe Figur 10)

Das oder die Verbindungelemente 4 ist/sind jeweils eine lokal verschweißte und verformte Zone des Scheitelabschnitts. Beispielsweise ist jedes Verbindungselement 4 eine V-förmige oder U-förmige lokale Einbuchtung der Klammer 2.

Die erste Klammer 2.1 weist mindestens ein mit dem Scheitelabschnitt 10 stoffschlüssig verbundenes zusätzliches Verbindungselement 4 auf, mit dem sie mit der dritten, zusätzlichen und gleichartigen Klammer 2.3, die an die zweite Stirnseite 20 der ersten Klammer 2.1 angrenzt, lösbar verbunden ist. Die erste Klammer 2.1 weist an der zweiten Stirnseite 20 ein zusätzliches Ausgleichselement 8 auf, das dazu ausgebildet ist, einem, durch das zusätzliche Verbindungselement 4 hervorgerufenen, Winkelversatz der Klammer 2.1 bezüglich der zusätzlichen Klammer 2.3 entgegenzuwirken. Das zusätzliche Ausgleichselement 8 ist ebenfalls im Ausgleichsbereich 24 angeordnet.

Mindestens ein oder jedes Ausgleichselement 8 der jeweiligen Klammer 2 erstreckt sich über den Scheitel 12.

Alternativ kann auch eines oder mehrere der Ausgleichselemente 8 vom Scheitel 12 beabstandet sein (nicht dargestellt).

Gemäß der zweiten Ausführungsform weist der Scheitelabschnitt 10 mindestens eine Ausnehmung 30 auf, die in senkrechter Richtung von der Frontalebene FE weg offen ist, insbesondere wobei die Ausnehmung in Zentralachsrichtung in proximaler und distaler Richtung offen ist (Figuren 8 und 9). Wie auf diesen Figuren sichtbar, ist in diesem Fall der Vorsprung 26 zweigeteilt und erstreckt sich beiderseits der Ausnehmung 30.

Der Klammerpack 1 umfasst eine erste Klammer 2.1 wie vorstehend beschrieben, und eine zweite Klammer 2.2 wie vorstehend beschrieben. Die erste Klammer 2.1 und die zweite Klammer 2.2 sind durch die jeweiligen Verbindungselemente 4 verbunden. Zumindest das Ausgleichselement 8 der ersten Klammer 2.1 stützt sich auf einem Ausgleichselement 8 der zweiten Klammer ab, so dass diese beiden Klammern 2.1, 2.2 im Wesentlichen keinen Winkelversatz zueinander aufweisen.

Alternativ kann sich das Ausgleichselement 8 der ersten Klammer 2.1 auch auf einer der Stirnseiten 18, 20 der zweiten Klammer 2.2 abstützen (nicht dargestellt), zum Beispiel falls die zweite Klammer 2.2 kein zur ersten Klammer gerichtetes Ausgleichselement 8 aufweist. In diesem Falle ist die wirksame Erstreckung des Ausgleichselements 8 der ersten Klammer gleich der gesamten wirksamen Breite der aneinander liegenden Ausgleichselemente 8 der ersten und zweiten Klammer 2.1, 2.2 der dargestellten Ausführungsformen.

Vorteilhafterweise fluchten die Klammerabschnitte dieser Klammern in einer Richtung senkrecht zur Frontalebene FE.

Der Klammerpack 1 umfasst mindestens eine dritte Klammer 2.3 wie oben beschrieben, wobei die erste Klammer und die dritte Klammer durch die jeweiligen Verbindungselemente 4 verbunden sind. Zumindest das Ausgleichselement 8 der ersten Klammer 2.1 stützt sich auf einem Ausgleichselement 8 der dritten Klammer 2.3 ab, so dass diese beiden Klammern 2.1, 2.3 im Wesentlichen keinen Winkelversatz zueinander aufweisen. Alternativ kann sich das Ausgleichselement 8 der ersten Klammer auch auf einer der Stirnseiten 18, 20 der dritten Klammer 2.3 abstützen. Vorteilhafterweise fluchten die Klammerabschnitte dieser Klammern in einer Richtung senkrecht zur Frontalebene.

Die Erfindung umfasst eine nicht dargestellte Klammervorrichtung, umfassend eine Klammereinheit, die dazu ausgebildet ist, Klammern in ein Substrat zu klammern. Die Klammervorrichtung umfasst eine Klammerzuführung mit einer geraden Klammerpackaufnahme 300 und ein Klammerpack. Der Klammerpack 1 ist ein Klammerpack 1 wie oben beschrieben. Dadurch, dass der Klammerpack 1 geradlinig ist wird der Klammerpack an jeder Stelle mit Spiel auf der geraden Klammerpackaufnahme gehalten. Die Klammerpackaufnahme ist im Wesentlichen quaderförmig mit einem rechteckigen Querschnitt. Die Zuführung der Klammern zur Klammereinheit ist also sichergestellt und führt zu einer schnellen und zuverlässigen Klammeroperation.

## Patentansprüche

1. Klammer (2; 2.1; 2.2; 2.3) für die Fixierung von Rohren auf einem Substrat, umfassend
- einen Scheitelabschnitt (10), der ein proximales Ende und ein distales Ende aufweist und einen Scheitel (12) bildet,
- zwei Klammerabschnitte (14, 16), die durch den Scheitelabschnitt verbunden sind,
wobei der Scheitelabschnitt eine erste und eine zweite Stirnseite (18, 20) aufweist,
wobei die Klammer eine Frontalebene FE und eine Mittelebene ME aufweist und sich die zwei Klammerabschnitte auf unterschiedlichen Seiten der Mittelebene befinden,
wobei der Scheitelabschnitt eine Zentralachse ZA definiert, die in der Mittelebene ME liegt und sich in Richtung vom proximalen zum distalen Ende erstreckt,
wobei die Klammer mindestens ein oder mehrere mit dem Scheitelabschnitt stoffschlüssig verbundenes Verbindungselement(e) (4) aufweist, mit dem die Klammer mit einer weiteren, insbesondere gleichartigen, Klammer (2.2), die an die erste Stirnseite angrenzt, lösbar verbindbar ist, lösbar verbunden ist oder lösbar verbunden gewesen ist,
wobei das oder die Verbindungselement(e) in Zentralachsrichtung einen Verbindungselementbereich (22) der Klammer definiert/definieren,
**dadurch gekennzeichnet, dass** die Klammer einen Ausgleichsbereich (24) aufweist, der sich in Zentralachsrichtung zwischen dem Verbindungselementbereich und dem Scheitel erstreckt,
**dadurch gekennzeichnet, dass** die Klammer an der ersten Stirnseite ein Ausgleichselement (8) aufweist, das dazu ausgebildet ist, einem, durch das Verbindungselement hervorgerufenen, Winkelversatz der Klammer bezüglich der weiteren Klammer (2.2) entgegenzuwirken, und
dadurch, dass das Ausgleichselement im Ausgleichsbereich angeordnet ist.

2. Klammer nach Anspruch 1, wobei das Ausgleichselement ein von der ersten Stirnseite vorstehender Vorsprung (26) ist, wobei der Vorsprung vorzugsweise stoffschlüssig, insbesondere in einem Stück, mit dem Scheitelabschnitt (10) gefertigt ist.

3. Klammer nach Anspruch 2, wobei der Vorsprung (26) sich in Zentralachsrichtung bis zum Scheitel (12) erstreckt und/oder der Vorsprung (26) sich bis zum Verbindungselementbereich (22) erstreckt und dort endet oder diese überdeckt.

4. Klammer nach einem der vorhergehenden Ansprüche, wobei das oder die Verbindungelement(e) (4) eine lokal verschweißte und verformte Zone des Scheitelabschnitts (10) ist/sind.

5. Klammer nach einem der vorhergehenden Ansprüche,
wobei die Klammer mindestens ein mit dem Scheitelabschnitt (10) stoffschlüssig verbundenes zusätzliches Verbindungselement (4) aufweist, mit dem sie mit einer zusätzlichen, insbesondere gleichartigen, Klammer (2.3), die an die zweite Stirnseite angrenzt, lösbar verbindbar ist, lösbar verbunden ist oder lösbar verbunden gewesen ist,
**dadurch gekennzeichnet, dass** die Klammer an der zweiten Stirnseite ein zusätzliches Ausgleichselement (8) aufweist, das dazu ausgebildet ist, einem, durch das zusätzliche Verbindungselement hervorgerufenen, Winkelversatz der Klammer bezüglich der zusätzlichen Klammer (2.3) entgegenzuwirken, und
**dadurch gekennzeichnet, dass** das zusätzliche Ausgleichselement im Ausgleichsbereich (24) angeordnet ist.

6. Klammer nach einem der vorhergehenden Ansprüche, wobei sich mindestens ein Ausgleichselement (8) über den Scheitel (12) erstreckt oder von diesem beabstandet ist.

7. Klammer nach einem der vorhergehenden Ansprüche, wobei der Scheitelabschnitt (10) mindestens eine Ausnehmung (30) aufweist, die in senkrechter Richtung von der Frontalebene FE weg offen ist, insbesondere wobei die Ausnehmung in Zentralachsrichtung in proximaler und distaler Richtung offen ist.

8. Klammerpack, umfassend
- eine erste Klammer (2.1) gemäß einem der vorhergehenden Ansprüche, und
- eine zweite Klammer (2.2) gemäß einem der vorhergehenden Ansprüche,
wobei die erste Klammer und die zweite Klammer durch die jeweiligen Verbindungselemente (4) verbunden sind und wobei zumindest das Ausgleichselement (8) der ersten Klammer sich entweder auf einer der Stirnseiten der zweiten Klammer oder auf einem Ausgleichselement der zweiten Klammer abstützt, so dass diese beiden Klammern im Wesentlichen keinen Winkelversatz zueinander aufweisen, und
wobei die Klammerabschnitte dieser beiden Klammern in einer Richtung senkrecht zur Mittelebene fluchten.

9. Klammerpack nach Anspruch 8, umfassend mindestens eine dritte Klammer (2.3) gemäß einem der Ansprüche 1 bis 7 wobei die erste Klammer und die dritte Klammer durch die jeweiligen Verbindungselemente (4) verbunden sind und wobei zumindest das Ausgleichselement der ersten Klammer sich entweder auf einer der Stirnseiten der dritten Klammer oder auf einem Ausgleichselement der dritten Klammer abstützt, so dass diese beiden Klammern im Wesentlichen keinen Winkelversatz aufweisen, und
wobei die Klammerabschnitte dieser beiden Klammern in einer Richtung senkrecht zur Mittelebene ME fluchten.

10. Klammervorrichtung umfassend
eine Klammereinheit, die dazu ausgebildet ist, Klammern in ein Substrat zu klammern,
eine Klammerzuführung mit einer geraden Klammerpackaufnahme (300), und
ein Klammerpack (1),
**dadurch gekennzeichnet, dass** der Klammerpack ein Klammerpack nach einem der Ansprüche 8 oder 9 ist und der Klammerpack an jeder Stelle mit Spiel auf der Klammerpackaufnahme gehalten ist.
